# EUROPÄISCHE PATENTSCHRIFT

(11) **EP 2 052 834 B1**
(45) Veröffentlichungstag und Bekanntmachung des Hinweises auf die Patenterteilung: **31.08.2011**
(21) Anmeldenummer: 08167228.9
(22) Anmeldetag: 22.10.2008
(51) Int. Cl.: B29C 45/33, B29C 45/44

(54) **Kunststoffspritzwerkzeug**
Plastic injection mould
Outil de moulage par injection de matières plastiques

(30) Priorität: 23.10.2007 DE 102007050959
(43) Veröffentlichungstag der Anmeldung: 29.04.2009
(73) Patentinhaber: z-werkzeugbau-gmbh, 6850 Dornbirn (AT)
(72) Erfinder: Bereuter, Klaus, 6850 Dornbirn (AT); Helth, Franz, 6845 Hohenems (AT)
(74) Vertreter: Müller, Enno

(56) Entgegenhaltungen:
- EP-A- 1 243 398
- EP-A- 1 905 566
- DE-A1- 3 439 212

## Beschreibung

Die Erfindung betrifft ein Kunststoffspritzwerkzeug, das in üblicher Weise einen Werkzeugkern, einen Auswerfer und ein Schieber-Werkzeugteil aufweist. Ein Schieber-Werkzeugteil dient zur Ausbildung eines Hinterschnitts an dem Kunststoffspritzteil. Das Schieber-Werkzeugteil ist hierzu grundsätzlich in einer Richtung senkrecht zu einer Mittelachse des Kunststoffspritzteils zu bewegen.

Speziell betrifft die Erfindung ein Kunststoffspritzwerkzeug zur Herstellung von Schraubkappen, weiter bevorzugt solchen Schraubkappen, die ein Garantieband aufweisen. Der genannte Hinterschnitt ist hier bspw. beim Übergang von der unteren freien Randkante der Schraubkappe zu dem davon zumindest teilweise über den Umfang gesonderten Garantieband erforderlich (das Garantieband ist bekanntlich über bspw. dünne Stege - Abreißstege - oder eine SollTrennlinie an der eigentlichen Schraubkappe angebunden).

Derartige Werkzeuge mit Schieber-Werkzeugteilen sind aufwendig. Denn es muss sowohl eine Bewegung der Teile in Auswerferrichtung vorgenommen werden, schon zum Auswerfen des Werkstücks, wie auch eine Bewegung senkrecht hierzu, zur Bewegung des Schieber-Werkzeugteils.

Bei einem aus der EP 1243398 A1 bekannten Werkzeug sind sowohl der Werkzeugkern wie auch der Ausstoßer jeweils und unabhängig voneinander verfahrbar. Bei einem weiter aus der DE 3439212 A1 bekannten Werkzeug ist der Werkzeugkern feststehend vorgesehen und sind der Ausstoßer und eine radial äußere Werkzeughülse durch gemeinsame Beaufschlagung verfahrbar.

Ausgehend hiervon beschäftigt sich die Erfindung mit der Aufgabe, ein Kunststoffspritzwerkzeug der angegebenen Art derart weiterzubilden, dass ein möglichst günstiger Gesamtaufbau des Kunststoffspritzwerkzeugs erreicht wird. Diese Aufgabe ist beim Gegenstand des Anspruches 1 gelöst. Wesentlich ist, dass die genannten Komponenten zwar jeweils verfahrbar sind, wobei das Schieber-Werkzeugteil zugleich in Ausstoßrichtung des Werkstücks senkrecht hierzu verfahrbar ist, während der Auswerfer und der Werkzeugkern bzw. ein verschiebbar zu dem Werkzeugkern vorgesehenes Formteil, in Auswerferrichtung verfahrbar sind und sowohl das Verfahren des Werkzeugkerns wie des Schieber-Werkzeugteils aus dem Verfahren des Auswerfers abgeleitet ist.

Eine mögliche Lösung dieser Aufgabe ist durch ein Kunststoffspritzwerkzeug mit den eingangs genannten Komponenten gegeben, die jeweils verfahrbar sind, wobei weiter das Schieber-Werkzeugteil zugleich in Ausstoßrichtung des Werkstücks und senkrecht hierzu verfahrbar ist, während der Auswerfer und der Werkzeugkern in Auswerferrichtung verfahrbar sind und sowohl das Verfahren des Werkzeugkerns wie des Schieber-Werkzeugteils aus dem Verfahren des Auswerfers abgeleitet ist. Dadurch, dass das Schieber-Werkzeugteil zugleich in Auswerferrichtung und senkrecht hierzu verfahrbar ist, kann eine Schrägführung verwirklicht werden, die eine Bewegung des Schieber-Werkzeugteils über lediglich eine der Bewegungskomponenten, nämlich bevorzugt die in Auswerferrichtung, ermöglicht, gleichwohl aber die erforderliche Seitwärtsverlagerung zur Freigabe des gespritzten Werkstücks ermöglicht. Dadurch, dass das Verfahren des Werkzeugkerns und des Schieberwerkzeugteils aus dem Verfahren des Auswerfers abgeleitet ist, bedarf es letztlich bspw. nur einer Beaufschlagung des Auswerfers um zugleich auch die gewünschten bzw. erforderlichen Ausfahrbewegungen des Werkzeugkerns und des Schieber-Werkzeugteils zu erreichen.

Anstatt des (gesamten) Werkzeugkerns kann auch nur ein bspw. hülsenartig auf dem Werkzeugkern angeordnetes Formteil verschiebbar sein, der verbleibende Werkzeugkern aber feststehend vorgesehen sein. Ein solches gesondertes Formteil ist bspw. insbesondere dann vorteilhaft, wenn ein Spritzling mit einer speziellen Innenkontur hergestellt werden soll. Beispielsweise im Falle einer Schraubkappe eine solche mit einer von der Innenfläche der Außenwandung nach innen distanziert ausgebildeten Dichtlippe (mitunter auch bezeichnet als "Olive").

Es ist bevorzugt, dass der Auswerfer mit dem Werkzeugkern vermittels eines gespritzten Kunststoffteils bewegungsgekoppelt ist. Das jeweils gespritzte Kunststoffteil erbringt also zugleich eine vorzugsweise durch Formschluss ge-(Weiter auf Seite 3 der ursprünglichen Beschreibung) Kopplung des Auswerfers mit dem Werkzeugkern. Dies kann bedeuten, dass der Auswerfer im Falle dass kein Teil gespritzt ist, unabhängig von dem Werkzeugkern bewegbar ist. Diese Bewegungskopplung über den Spritzling ist bevorzugt solange gegeben, wie die vermittels des Auswerfers auf das Spritzteil einwirkenden Kräfte geringer sind als die Kräfte, die zum Abstoßen des Spritzteils von dem Werkzeugkern erforderlich sind.

Ein weiteres bevorzugtes Merkmal ist dadurch gegeben, dass der Werkzeugkern zur Zusammenwirkung mit dem Schieber-Werkzeugteil beim Ausfahren ein Ankopplungsteil mitschleppt. Der Werkzeugkern wirkt also hierbei nicht unmittelbar auf das Schieber-Werkzeugteil ein, sondern vermittels eines zwischengeschalteten weiteren Teiles. Hierüber lässt sich bspw. baulich vergleichsweise einfach erreichen, dass das zumindest teilweise auch radial außerhalb des Auswerfers befindliche Schieber-Werkzeugteil gleichwohl durch den sich radial innerhalb des Auswerferteils befindliche Werkzeugkern mitschleppbar ist.

Hierbei ist weiter bevorzugt, dass der Werkzeugkern und das Ankopplungsteil über Formschluss zusammenwirken.

Der Auswerfer selbst ist geeigneterweise über eine Auswerferstange zu betätigen. Hierbei kann der Auswerfer hülsenartig ausgebildet sein und auch nur über eine Auswerferstange zu betätigen sein. Er kann aber auch über mehrere Auswerferstangen zu betätigen sein und/ oder, über den Umfang, mehrteilig ausgebildet sein. Die Auswerferstange kann unmittelbar im Werkzeug selbst angeordnet und, bevorzugt hydraulisch, oder auch pneumatisch angetrieben sein. Dies kann einen entsprechenden Antrieb und/oder eine entsprechende Lagerung in der Kunststoffspritzmaschine also solcher ersparen.

Die Auswerferstange verfährt geeigneterweise gleichfalls auch (nur) in Auswerferrichtung.

Hierbei ist weiter bevorzugt die Auswerferstange zur Hin- und Herbewegung mit dem Auswerfer gekuppelt. Beispielsweise durch eine Schraubverbindung. Der Auswerfer kann also hierdurch auch nach erfolgtem Auswurf des Spritzteils wieder zurückgezogen werden. Da der Auswerfer insoweit auch, in Rückbewegungsrichtung, den Werkzeugkern, geeigneterweise über eine Formschlussverbindung, mitschleppt, wird hiermit zugleich der Werkzeugkern wieder zurückgezogen.

Hinsichtlich des Schieber-Werkzeugteils ist eine aktive Zurückziehung nicht erforderlich. Die Rückbewegung des Schieber-Werkzeugteils ist vielmehr bevorzugt durch die Anlage des gegenüberliegenden Werkzeugteils beim Schließen des Werkzeugs erreicht.

Das Schieber-Werkzeugteil ist in weiterer Einzelheit bevorzugt an einem eine Schrägführung ausbildenden Führungsteil gefesselt. Diese Schrägführung gibt den Winkel vor, in welchem sich das Schieber-Werkzeugteil beim Entformen bewegt. Es handelt sich um einen im Querschnitt spitzen Winkel zu der genannten Längsachse des Werkzeugkerns (eingeschlossen zwischen einer Schrägführungsebene und der genannten Längsachse). Der spitze Winkel α liegt zwischen 0 und 90°, wobei die exakten Gradzahlen 0 und 90° nicht mit eingeschlossen sind. Bevorzugt liegt der spitze Winkel α zwischen 10° und 60°, wobei ausgehend von den genannten 0 bis 90°, insbesondere aber bzgl. der bevorzugt angegebenen Bereiche, auch sämtliche Zwischenwerte, nicht nur die vollen Gradzahlen, sondern auch Winkelminuten bzw. Sekunden bzw. eine Verschiebung der Bereichsgrenzen von oben und/oder von unten um eine oder mehrere der genannten Werte oder Zwischenwerte hiermit eingeschlossen sind. Bevorzugt handelt es sich um einen Winkel zwischen 15° bis 25°.

Insbesondere ist das Schieber-Werkzeugteil durch eine Durchdringungsführung an dem Führungsteil gefesselt. Dieser Durchdringungsführung weist weiter bevorzugt in Richtung auf eine Längsmittelachse des Werkzeugkerns einen Hinterschnitt auf.

Weiter ist auch bevorzugt, dass bezogen auf die Längsmittelachse des Werkzeugkerns mehrere Schieber-Werkzeugteile umfangsmäßige verteilt vorgesehen sind.

Nachstehend ist die Erfindung weiter anhand der beigefügten Zeichnung erläutert, die aber lediglich ein Ausführungsbeispiel der Erfindung darstellt. Hierbei zeigt:
- Figur 1: eine schematische Querschnittsansicht einer einen Werkzeugkern, einen Auswerfer und ein Schieber-Werkzeugteil aufweisenden Formhälfte eines Kunststoffspritzwerkzeuges, nach erfolgter Spritzung einer Schraubkappe und bei bereits aufgefahrener zwei- ter Formhälfte;
- Figur 2: den Gegenstand gemäß Figur 1 nach einem Verfahren des Werk- zeugkerns in Auswurfrichtung und gleichzeitigem Schrägverfah- ren des Schieber-Werkzeugteils;
- Figur 3: den Gegenstand gemäß Figur 2 nach weiterem Verfahren des Auswerfers mit ausgeworfen von dem Werkzeugkern dargestell- ter Kunststoff-Schraubkappe;
- Figur 4: eine teilweise geschnittene Darstellung des Schieber- Werkzeugteils mit Führungsteil; und
- Figur 5: eine Draufsicht auf den Gegenstand gemäß Figur 4, gesehen in Richtung des Pfeiles V in Figur 4.

Dargestellt und beschrieben ist ein nur hinsichtlich einer Formhälfte 2 dargestelltes Kunststoffspritzwerkzeug 1.

Die Formhälfte 2 weist einen Werkzeugkern 3 auf, der beim Ausführungsbeispiel die Innengeometrie einer hier zu spritzenden Kunststoff-Schraubkappe 4 wiedergibt. Hierbei weist der beim dargestellten Ausführungsbeispiel grundsätzlich feststehende Werkzeugkern 3 in weiterer Einzelheit ein dazu verschiebbares Formteil 5 auf, welches im Einzelnen das Innengewinde 6 und die dem Innengewinde 6 zugewandte Kontur der Dichtlippe 7 formt.

Wie sich aus der Mittellinie M ergibt, sind die dargestellten Teile grundsätzlich rotationssymmetrisch gebildet. Es handelt sich bei dem Formteil 5 also um ein Hülsenteil, während der eigentliche Werkzeugkern 3 ansonsten stempelartig ausgebildet sein kann. Ist das Formteil 5 nicht vorgesehen, wenn also bspw. keine Dichtlippe 7 auszuformen ist, ist in der Regel der Werkzeugkern 3 verschiebbar vorgesehen.

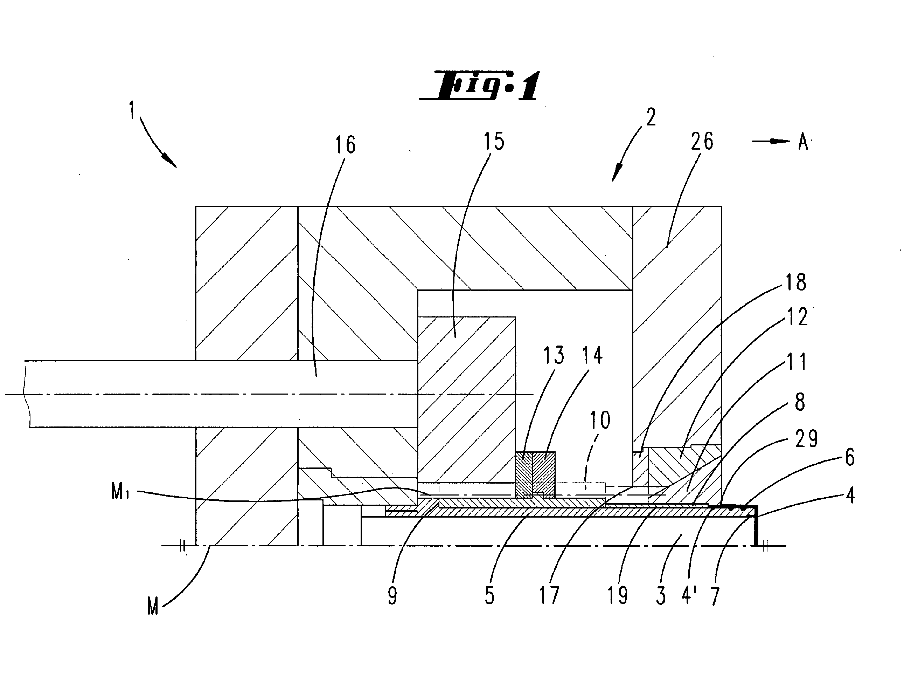

Radial außerhalb zu dem Formteil 5 ist der Auswerfer 8 angeordnet. Der Auswerfer 8 ist gleichfalls hülsenartig gestaltet. Der Auswerfer 8 ist relativ zu dem Werkzeugkern 3 in Auswerferrichtung A relativ verschiebbar. Ausgehend von der Stellung gemäß Figur 1 ist er in Gegenrichtung zu der Auswerferrichtung A nicht verschiebbar zu dem Werkzeugkern 3, sondern liegt vielmehr an einem Formschlussvorsprung 9 des Werkzeugkerns 3, speziell hier des Formteils 5, innenseitig an.

"Innenseitig" ist hier in Werkzeug-Innenrichtung, also in entgegengesetzter Richtung zur Auswerferrichtung A, gemeint.

Weiter radial außerhalb zu dem Auswerfer 8 ist ein Kopplungsteil 10 angeordnet, das zur Bewegungskopplung zwischen dem Werkzeugkern 3, d. h. beim Ausführungsbeispiel speziell dem Formteil 5, und dem Schieber-Werkzeugteil 11 geeignet ist. Auch dieses Kopplungsteil 10, das beim Ausführungsbeispiel stangen- bzw. bolzenartig ausgebildet ist, wird von dem Werkzeugkern 3 bzw. beim Ausführungsbeispiel von dem Formteil 5, da der Werkzeugkern 3 hier feststehend ist, vermittels des Formschlussvorsprunges 9 mitgeschleppt. Dies beim Ausführungsbeispiel aufgrund der Tatsache, dass das Kopplungsteil 10, wie sich durch die Mittelachse M1 ergibt, teilweise den Auswerfer 8 durchdringt.

Das Schieber-Werkzeugteil 11 ist mit einem feststehenden Führungsteil 12 gekoppelt, wie dies weiter unten noch im Einzelnen erläutert ist.

Der Auswerfer 8 ist vermittels Befestigungsteilen 13, 14 mit einer Auswerferplatte 15 fest verbunden. Diese Auswerferplatte 15 wiederum ist durch eine Auswerferstange 16 beaufschlagt, wobei die Auswerferstange 16 mit der Auswerferplatte 15 auch fest verbunden ist.

Figur 1 gibt den Zustand des bereits geöffneten Kunststoffspritzwerkzeuges 1 wieder. Das heißt eine zweite, nicht dargestellte Formhälfte ist bereits in Auswerferrichtung A aufgefahren worden.

Die gespritzte Schraubkappe 4 liegt bis auf das angespritzte Garantieband 4' frei. Es ist ersichtlich, dass das Schieber-Werkzeugteil 11 mit einem Fortsatz 29 zwischen das Garantieband 4' und die in Auswerferrichtung darüber befindliche Wandung der Schraubkappe 4 ragt. Zugleich liegt der Auswerfer 8 unterseitig des Garantiebandes an dem Kunststoffspritzteil 4 an.

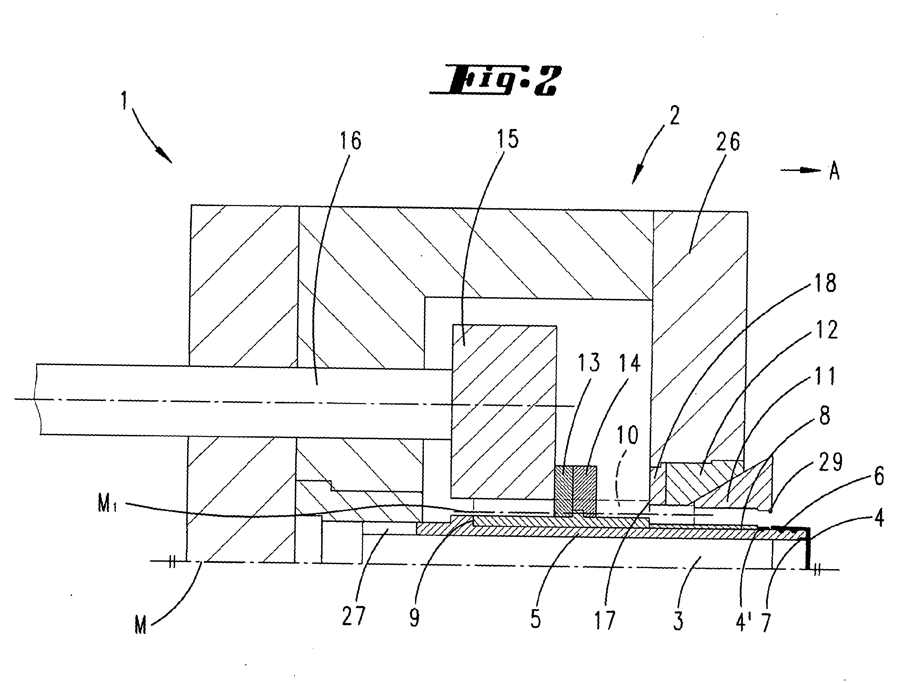

Bei der Darstellung gemäß Figur 2 ist nun der Auswerfer 8 vermittels Beaufschlagung der Auswerferstange 16 in Auswerferrichtung A verfahren. Aufgrund der Anlage an dem Kunststoffspritzteil 4 hat der Auswerfer 8 hierbei das Formteil 5 mitgeschleppt. Zugleich hat der Auswerfer 8 über den Werkzeugkern 3, die beschriebene Formschluss-Anlage aufgrund des Formschlussvorsprunges 9, das Kopplungsteil 10 mitgeschleppt, das durch unterseitige Anlage an dem Schieber-Werkzeugteil 11 dieses verfahren hat. Und zwar aufgrund der Schrägführung an dem Schieber-Werkzeugteil 11 sowohl nach radial außen wie in Auswerferrichtung A.

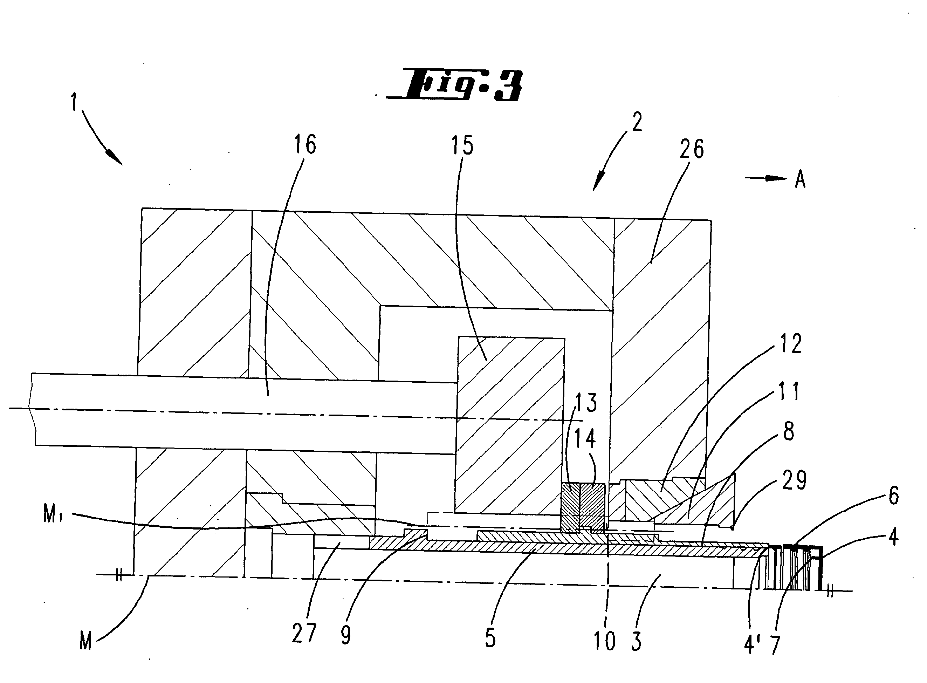

In der Darstellung gemäß Figur 3 ist dargestellt, dass nach weiterer, erhöhter Beaufschlagung des Auswerfers 8 über die Auswerferstange 16 die Schraubkappe 4 (die hier nur zu Darstellungszwecken gleichsam "schwebend" dargestellt ist, natürlich fällt sie ansonsten sogleich nach erfolgtem Auswurf nach unten) von dem Werkzeugkern 3 abgestoßen worden. Der Werkzeugkern 3, bzw. konkret beim Ausführungsbeispiel das Formteil 5, konnte gegenüber der Stellung gemäß Figur 2 ein weiteres Verfahren in Richtung Auswerferrichtung A nicht mit vollziehen, da er über das Kopplungsteil 10 in dieser Richtung nach Erreichen der Stellung gemäß Figur 2 bewegungsblockiert ist. Das Kopplungsteil 10 weist hierzu im Einzelnen einen Anschlagbund 17 auf, der in dieser Stellung an einem hier dem Führungsteil 12 zugeordneten Anschlagteil 18, das werkzeugfest ist, anliegt.

Es ist ersichtlich, dass das hier bolzenartig ausgebildete Kopplungsteil 10 rückseitig, im Bereich des Formschlussvorsprunges 9 des Werkzeugkerns 3, konkret des Formteils 5, frei liegt. Hinsichtlich des Auswerfers 8, der hülsenartig gebildet ist, kann eine Umfangsverbindung in dem vorderen Abschnitt 19 ausreichend sein. Je nach Gestaltung kann aber auch im rückwärtigen Bereich noch eine Verbindung verbleiben.

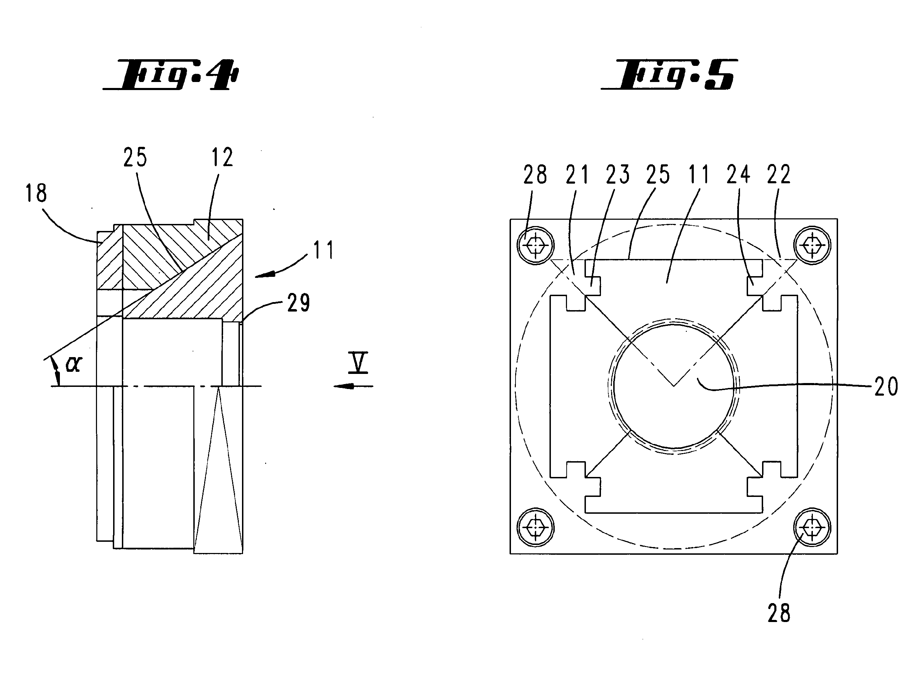

In den Figuren 4 und 5 ist das Schieber-Werkzeugteil 11 in Zusammenwirkung mit dem Führungsteil 12 in weiterer Einzelheit dargestellt.

Es ist ersichtlich, dass beim Ausführungsbeispiel mehrere, nämlich vier Schieber-Werkzeugteile 11 vorgesehen sind, die sich im eingefahrenen Zustand, also dem Zustand gemäß Figur 1, wie er in Figur 5 dargestellt ist, zu einem geschlossenen Innen-Umfang ergänzend.

Die Schieber-Werkzeugteile 11 weisen ganz grundsätzlich, in der Ansicht gemäß Figur 5, eine dreiecksförmige Grundfläche auf, wobei die in insoweit theoretisch gegebene Spitze 20, die in Figur 5 strichliniert dargestellt ist, soweit weggefallen ist, wie der Außenumfang des zu erzeugenden Spritzlings reicht. Bei der hier gegebenen rotationssymmetrischen Gestaltung ist also in dieser Darstellung die Spitze 20 insoweit weggefallen, als sich die überlagerte kreisförmige Gestaltung des Spritzlings ergibt.

Rückwärtig bzw. radial außen sind diesbezügliche Spitzbereiche 21 bzw. 22 zugunsten eines Führungseingriffs an dem Führungsteil 12 weggefallen. Das Führungsteil 12 weist ersichtlich hierzu Führungsfedern 23, 24 auf, die in eines der Schieber-Werkzeugteile 11 jeweils gegenüberliegend im Fußbereich des genannten Dreiecks in entsprechende Nuten an dem Schieber-Werkzeugteil 11 eingreifen. Weiter bildet das Führungsteil 12 eine Schrägführungsebene 25 aus, s. auch Figur 4, auf welcher das Schieber-Werkzeugteil 11 aufliegend verfahren kann.

Die Schrägführungsebene 25, s. insbesondere auch Figur 4, schließt mit der Mittelachse M in der dargestellten Schnittdarstellung einen spitzen Winkel α ein. Der spitze Winkel α liegt beim Ausführungsbeispiel bei 30°.

Von Bedeutung ist auch, dass aufgrund der gegebenen Gestaltung des beschriebenen Kunststoffspritzwerkzeuges 1 eine sehr günstige Wartungsmöglichkeit gegeben ist. Nach Lösen bspw. einer Schraubverbindung zwischen dem Führungsteil 12 und dem umgebenden Werkzeugteil 26 ist das - bevorzugt seinerseits mit dem Führungsteil 12 schraubverbundene - Anschlagteil 18 zugänglich. Denn das Führungsteil 12 kann zusammen mit Anschlagteil 18 und Schieber-Werkzeugteil 11 herausgenommen werden. Nach einer solchen Herausnahme sind dann die Teile 5, 8, 10, 13 und 14 zugänglich und können entfernt werden, woraufhin der Werkzeugkern, der Auswerfer und (bereits zuvor) das Schieber-Werkzeugteil 11 ohne Weiteres zur Wartung oder Austausch zugänglich sind. Das beim Ausführungsbeispiel feststehende Werkzeugkern-Teil 3 kann auch zu Wartungszwecken günstig entnehmbar vorgesehen sein. Beispielsweise über eine Rast- oder Schraubverbindung.

In weiterer Einzelheit ist das Führungsteil 12 mit dem Werkzeugteil 26 verschraubt. Und zwar beim Ausführungsbeispiel mittels der in Figur 5 ersichtlichen vier Schrauben 28. Die Schrauben 28 sind ersichtlich in Eckbereichen des Führungsteils 12 angeordnet, die einen entsprechenden Überstand besitzen, so dass die Schrauben unmittelbar in das Werkzeugteil 26 eingreifen können.

Anzumerken ist noch, dass der Auswerfer 8 zusätzlich fußseitig im Bereich 27 unterstützungs-beaufschlagt sein kann. Beispielsweise durch eine Feder oder auch pneumatisch oder hydraulisch, d. h. durch Druckluft oder durch sonstiges Druckmittel, um die genannten Bewegungen zu unterstützen.

## Patentansprüche

1. Kunststoffspritzwerkzeug (1) mit einem verschiebbaren Werkzeugkern (3) oder einem verschiebbar zu einem feststehenden Werkzeugkern (3) vorgesehenen Formteil (5), einem Auswerfer (8) und einem Schieber-Werkzeugteil (11) zur Ausbildung eines Hinterschnitts, die jeweils verfahrbar sind, wobei das Schieber-Werkzeugteil (11) zugleich in Ausstoßrichtung (A) des in dem Werkzeug hergestellten Kunststoffspritzteils (4) und senkrecht hierzu verfahrbar ist, während der Auswerfer und der Werkzeugkern (3) oder das Formteil (5) in Auswerferrichtung (A) verfahrbar sind und sowohl das Verfahren des Werkzeugkerns (3) oder des Formteils (5) wie das Verfahren des Schieber-Werkzeugteils (11) aus dem Verfahren des Auswerfers (8) abgeleitet ist.

2. Kunststoffspritzwerkzeug nach Anspruch 1, **dadurch gekennzeichnet, dass** der Auswerfer (8) mit dem Werkzeugkern (3, 5) vermittels eines Kunststoffspritzteiles (4) bewegungsgekoppelt ist.

3. Kunststoffspritzwerkzeug nach einem der vorhergehenden Ansprüche,
**dadurch gekennzeichnet, dass** der Werkzeugkern (3, 5) zur Zusammenwirkung mit dem Schieber-Werkzeugteil (11) beim Ausfahren ein Ankopplungsteil (10) mitschleppt.

4. Kunststoffspritzwerkzeug nach Anspruch 3, **dadurch gekennzeichnet, dass** der Werkzeugkern (3, 5) und das Ankopplungsteil (10) über Formschluss zusammenwirken.

5. Kunststoffspritzwerkzeug nach einem der vorhergehenden Ansprüche,
**dadurch gekennzeichnet, dass** der Auswerfer (8) über eine Auswerferstange (16) betätigt ist.

6. Kunststoffspritzwerkzeug nach Anspruch 5, **dadurch gekennzeichnet, dass** die Auswerferstange (16) gleichfalls in Auswerferrichtung (A) verfährt.

7. Kunststoffspritzwerkzeug nach einem der Ansprüche 5 oder 6, **dadurch gekennzeichnet, dass** die Auswerferstange (16) zur Hin- und Herbewegung mit dem Auswerfer (8) gekuppelt ist.

8. Kunststoffspritzwerkzeug nach einem der vorhergehenden Ansprüche, **dadurch gekennzeichnet, dass** das Schieber-Werkzeugteil (11) an einem eine Schrägführung ausbildenden Führungsteil (12) gefesselt ist.

9. Kunststoffspritzwerkzeug nach Anspruch 8, **dadurch gekennzeichnet, dass** die Fesselung durch eine Durchdringungsführung erreicht ist, die in Richtung auf eine Längsmittelachse (M) des Werkzeugkerns (3,5) einen Hinterschnitt aufweist.

10. Kunststoffspritzwerkzeug nach einem der vorhergehenden Ansprüche, **dadurch gekennzeichnet, dass** bezogen auf die Längsmittelachse (M) des Werkzeugkerns (3,5) mehrere Schieber-Werkzeugteile (11) umfangsmäßig verteilt vorgesehen sind.

## Claims

1. Injection-molding tool (1) with a shiftable tool core (3) or a tool part (5) being shiftable relatively to a fixed tool core (3), an ejector (8) and a sliding tool portion (11) for forming an undercut, each of which is displaceable, the sliding tool portion (11) being displaceable both in the push-out direction (A) of the plastics molded component (4) produced in the tool and perpendicular to this direction, while the ejector and the tool core (3) are displaceable in the ejection direction (A) and both the travel of the tool core (3) or the tool part (5) and that of the sliding tool portion (11) are derived from the travel of the ejector (8).

2. Injection-molding tool according to Claim 1, **characterized in that** the ejector (8) is coupled for movement to the tool core (3, 5) by means of a molded plastics component (4).

3. Injection-molding tool according to one or more of the preceding claims, **characterized in that** the tool core (3, 5), in order to interact with the sliding tool portion (11), carries along a coupling part (10) during outward travel.

4. Injection-molding tool according Claim 3, **characterized in that** the tool core (3, 5) and the coupling part (10) interact by way of a positive connection.

5. Injection-molding tool according to one or more of the preceding claims, **characterized in that** the ejector (8) is actuated by way of an ejector pin (16).

6. Injection-molding tool according to Claim 5, **characterized in that** the ejector pin (16) likewise travels in the ejection direction (A).

7. Injection-molding tool according to one of the Claims 5 or 6, **characterized in that** the ejector pin (16) is coupled to the ejector (8) for to and for movement.

8. Injection-molding tool according to one or more of the preceding claims, **characterized in that** sliding tool portion (11) is constrained on a guide part (12), which defines a sloping guide.

9. Injection-molding tool according to Claim 8, **characterized in that** the constraint is achieved by a penetrating guide feature, which has an undercut in the direction of a longitudinal central axis (M) of the tool core (3, 5).

10. Injection-molding tool according to one or more of the preceding claims, **characterized in that** a plurality of sliding tool portions (11) are distributed circumferentially with respect to the longitudinal central axis (M) of the tool core (3, 5).

## Revendications

1. Moule de moulage par injection de matière plastique (1), comportant un noyau (3) mobile ou un élément de moulage (5), prévu mobile par rapport au noyau (3) fixe, un éjecteur (8) et un élément à coulisse (11) pour la réalisation d'une contre-dépouille, lesquels sont respectivement mobiles, l'élément à coulisse (11) étant mobile en même temps dans la direction d'éjection (A) de la pièce en matière plastique moulée par injection (4) et perpendiculairement à ladite direction, tandis que l'éjecteur et le noyau (3) ou l'élément de moulage (5) sont mobiles dans la direction d'éjection (A), et le déplacement du noyau (3) ou de l'élément de moulage (5), de même que le déplacement de l'élément à coulisse (11) résultent du déplacement de l'éjecteur (8).

2. Moule de moulage par injection de matière plastique selon la revendication 1, **caractérisé en ce que** l'éjecteur (8) est couplé en mouvement avec le noyau (3, 5) par l'intermédiaire de la pièce en matière plastique moulée par injection (4).

3. Moule de moulage par injection de matière plastique selon l'une quelconque des revendications précédentes, **caractérisé en ce que** le noyau (3, 5) entraîne avec lui un élément d'accouplement (10), en vue de coopérer avec l'élément à coulisse (11) au moment du déplacement vers l'extérieur.

4. Moule de moulage par injection de matière plastique selon la revendication 3, **caractérisé en ce que** le noyau (3, 5) et l'élément d'accouplement (10) coopèrent entre eux par conjugaison de forme.

5. Moule de moulage par injection de matière plastique selon l'une quelconque des revendications précédentes, **caractérisé en ce que** l'éjecteur (8) est actionné par l'intermédiaire d'une tige d'éjection (16).

6. Moule de moulage par injection de matière plastique selon la revendication 5, **caractérisé en ce que** la tige d'éjection (16) est également déplacée dans la direction d'éjection (A).

7. Moule de moulage par injection de matière plastique selon la revendication 5 ou 6, **caractérisé en ce que** la tige d'éjection (16) est couplée à l'éjecteur (8) pour un mouvement en va-et-vient.

8. Moule de moulage par injection de matière plastique selon l'une quelconque des revendications précédentes, **caractérisé en ce que** l'élément à coulisse (11) est accroché à un élément de guidage (12) formant un guidage incliné.

9. Moule de moulage par injection de matière plastique selon la revendication 8, **caractérisé en ce que** l'accrochement est réalisé au moyen d'une glissière intercalée, qui comporte une contre-dépouille dans la direction d'un axe médian longitudinal (M) du noyau (3, 5).

10. Moule de moulage par injection de matière plastique selon l'une quelconque des revendications précédentes, **caractérisé en ce qu'**il est prévu plusieurs éléments à coulisse (11) répartis sur le pourtour par rapport à l'axe médian longitudinal (M) du noyau (3, 3).
